# EUROPEAN PATENT SPECIFICATION

(11) **EP 1 481 402 B1**
(45) Date of publication and mention of the grant of the patent: **08.03.2006**
(21) Application number: 02805174.6
(22) Date of filing: 18.12.2002
(51) Int. Cl.: G21G 4/08

(54) **METHOD AND APPARATUS FOR SEPARATING IONS OF METALLIC ELEMENTS IN AQUEOUS SOLUTION**
VERFAHREN UND VORRICHTUNG ZUR TRENNUNG DER IONEN VON METALLISCHEN ELEMENTEN IN WÄSSRIGER LÖSUNG
PROCEDE ET APPAREIL POUR SEPARER LES IONS D'ELEMENTS METALLIQUES DANS UNE SOLUTION AQUEUSE

(30) Priority: 18.12.2001 US 341688 P; 17.12.2002 US 321333
(43) Date of publication of application: 01.12.2004
(73) Proprietor: Bristol-Myers Squibb Pharma Company, Princeton, New Jersey 08543-4000 (US)
(72) Inventor: LEWIS, Robert, E., Milford, NH 03055 (US); SU, Fu-Min, Seattle, WA 98125 (US); LANE, Timothy, A., Salem, NH 03079 (US); OLEWINE, Keith, R., Merrimack, NH 03054 (US); HOLTON, Peter, S., Lexington, MA 02420 (US)
(74) Representative: Howard, Paul Nicholas
(86) International application number: PCT/US2002/040261
(87) International publication number: WO 2003/051494

(56) References cited:
- US-A- 3 993 538
- US-A- 5 368 736
- US-A- 5 512 256
- NUNEZ L ET AL: "Transuranic separation using organophosphorus extractants adsorbed onto superparamagnetic carriers" PROCEEDINGS OF THE SECOND INTERNATIONAL CONFERENCE ON SCIENTIFIC AND CLINICAL APPLICATIONS OF MAGNETIC CARRIERS, CLEVELAND, OH, USA, 28-30 MAY 1998, vol. 194, no. 1-3, pages 102-107, XP002237682 Journal of Magnetism and Magnetic Materials, April 1999, Elsevier, Netherlands ISSN: 0304-8853
- DATABASE WPI Section Ch, Week 198217 Derwent Publications Ltd., London, GB; Class A97, AN 1982-34256E XP002237684 & JP 57 048699 A (JGC CORP) 20 March 1982 (1982-03-20)
- WIKE J S ET AL: "CHEMISTRY FOR COMMERCIAL SCALE PRODUCTION OF YTTRIUM-90 FOR MEDICAL RESEARCH" INTERNATIONAL JOURNAL OF RADIATION APPLICATIONS AND INSTRUMENTATION PART A: APPLIED RADIATION AND ISOTOPES, PERGAMON PRESS LTD., EXETER, GB, vol. 41, no. 9, 1990, pages 861-865, XP000169509 cited in the application
- NAVRATIL J D: "Recent advances in americium processing chemistry" INTERNATIONAL CONFERENCE ON NUCLEAR AND RADIOCHEMISTRY (ICNR '86) (PAPERS IN SUMMARY FORM ONLY RECEIVED), BEIJING, CHINA, 1-5 SEPT. 1986, page 7, XP008015781 1986, Beijing, China, Chinese Nucl. Soc, China
- DATABASE WPI Section Ch, Week 199725 Derwent Publications Ltd., London, GB; Class E33, AN 1997-279469 XP002237685 & RU 2 068 392 C (AVISMA TITANIUM MAGNESIUM COMB STOCK CO) 27 October 1996 (1996-10-27)
- SHADRIN A YU ET AL: "Recovery of rare-earths and actinide elements from strongly acidic HAW with the use of bifunctional neutral organo-phosphorus compounds (BNPC)" NUCLEAR SOCIETY INTERNATIONAL, MOSCOW 1992 ANNUAL TOPICAL MEETING 'NUCLEAR TECHNOLOGY TOMORROW', ST. PETERSBURG, RUSSIA, 14-18 SEPT. 1992, vol. 67, suppl., no. 1, pages 281-283, XP008015856 Transactions of the American Nuclear Society, 1993, USA ISSN: 0003-018X

## Description

### Field of the Invention

This invention is generally directed to methods and apparatus for separating ions of metallic elements in aqueous solution by chromatography. The elements to be separated may belong to the same or to different Groups in the long periodic table, including main group elements, transition metals, lanthanides and actinides. The present invention relates more particularly to an apparatus and a method for separating ions ofradioisotopes such as ⁹⁰Y and ²⁰¹TI from their parent elements, and producing multicurie levels of same for medical applications while generating minimum waste.

### Background of the Invention

Radioactive isotopes of many metallic elements have potential uses in the diagnosis and treatment of disease. The yttrium-90 isotope, for example, which has a half-life of 64 hours and emits a strong beta particle (Emax=2.28 MeV), has excellent promise in treating many human diseases, and recent advances in radioimmunotherapy and peptide targeted radiotherapy have created a great demand for ⁹⁰Y. Another radioisotope, thallium-201, which has a half-life of 73 hours and emits photons of 135 and 167 keV, is widely used as a myocardial perfusion imaging agent. Numerous other examples of radioactive isotopes, and their potential use as radiopharmaceuticals are well known to those in the art.

One way to produce radioisotopes with potential use as radiopharmaceuticals is from the decay of radioactive species of elements from adjacent groups in the periodic table. For Example, ⁹⁰Y can be produced from the 28-year half-life decay of ⁹⁰Sr. Similarly, ²⁰¹Tl is decayed from its parent ²⁰¹Pb (T_{1/2}= 9.33 hour).

To be used as radiopharmaceuticals, the target isotopes generally need to be separated from the parent compounds. Many different techniques have been used to separate radioisotopes, including precipitation, solvent extraction, and ion-exchange chromatography, and the use of a number of organophosphorus extractants has been described. For example, di-2-ethylhexylphosphoric acid (DEHPA) has been widely used in extraction technology of rare earths and yttrium since the publication of Peppard, et al. (D. F. Peppard, et al., J. Inorg. Nucl. Chem. 4: 334, 1957) in 1957. DEHPA was also used in high level separations of fission products of rare earths and ⁹⁰Y at Oak Ridge National Laboratory in 1959. A smaller scale procedure for millicurie quantities of ⁹⁰Y was used at Oak Ridge National Laboratory (ORNL) (N. Case, et al., ORNL Radioisotope Manual, U.S.A.E.C. Report ORNL-3633, TID 4500, 30^{th} edition, June 1964) from 1962 to 1990. This procedure was later modified for use in purification of reagents and is now used commercially to supply ⁹⁰Y (J. A. Partridge, et al., J. Inorg. Nucl. Chem. 31: 2587-89, 1969; and Lane A. Bray, et al., U.S. Patent 5512256, April 30, 1996).

Another organophosphorus compound, 2-ethylhexyl 2-ethylhexylphosphonic acid (EHEHPA), was also developed by Peppard (D. F. Peppard, et al., J. Inorg. Nucl. Chem. 18: 245, 1961 and J. Inorg. Nucl. Chem. 27: 2065, 1965). This extractant became widely used to recover yttrium, other rare earths and trivalent actinides, because it was readily stripped with dilute acid. Several investigators have reported a specific preference for EHEHPA over DEHPA for yttrium recovery (Y. Mori, et al., Proc. Symp. Solvent Extr. 119-24, Jpn. Assoc. Solvent Extr. Hamamatsu, Japan, 1984; K. Inoue, et al., Nippon Kogyo Kaishi, 102: 491-4,1984; D. Li, et al., Int. Solvent Extr. Conf. (proc.) 3: 80-202, 1980; D. Li, et al., New Frontiers in Rare Earth Science and Applications, 1: 463-67, 1985; and P. V. Achuthan, et al., Separation Science and Technology, 35: 261-270, 2000).

The use of neutral organophosphorus compounds for recovery and purification of uranium, actinides and rare earths began in the 1950's (J. C. Warf, J. Am. Chem. Soc. 71: 3257, 1949) with tri-n-butyl phosphate (TBP). Other extractants with phosphine groups were tested in the 1960-70's with some success. The work at Argonne National Laboratory (R. C. Gatrone, et al., Solvent Extr. and Ion Exch. 5: 1075-1116, 1987) in developing a number of compounds of the carbamoylmethylphosphine oxides type led to a class of extractants for removing trivalent, quadri-valent and hexa-valent ions from nitric acid solutions. A number of papers from Argonne National Laboratory and from USSR in the 1980-83 period also demonstrated the use of the this type of extractant (D. G. Kalina, et al, Sep. Sci. Technol. 17: 859, 1981; T. Y. Medved, et al., Acad. Sci. U. S. S. R., Chem. Series, 1743, 1981; E. P. Horwitz, et. al., Sep. Sci. Technol. 17: 1261, 1982; M. K. Chmutova, et al., Sov. Radiochem. Eng. Transl. 24: 27, 1982; E. P. Horwitz, et al., Proceedings ISEC'83 1983; M. K. Chmutova, et al., J. Radioanal. Chem. 80: 63, 1983; A. C. Muscatello, et al., Proceedings ISEC'83, pp. 72, 1983; E. P. Horwitz, et al., Solvent Extr. Ion Exch. 3: 75, 1985; W. W. Shultz, et al., J. Less-Common Metals, 122: 125, 1986; J. N. Mathur, et al., Talanta, 39: 493-496, 1992; J. N. Mathur, et al., Waste Management, 13: 317-325, 1993). When using this technique, the ions are extracted as the metal nitrates from nitric acid solution. The extractants, loaded with the ions, are then back extracted with dilute acids or salt solutions (0.01-0.1N), which causes the ions to strip from the extractant, thereby permitting easy recovery without boil-down of the acids.

As noted above, ²⁰¹Tl is produced by decay (electron capture) of its parent isotope, ²⁰¹Pb. ²⁰¹Pb is generally produced in a cyclotron by irradiating ²⁰³Tl with ~30 MeV protons (²⁰³Tl(p, 3n)²⁰¹Pb). Separation of ²⁰¹Tl from the irradiated targets is traditionally performed in two steps. First, radioactive lead is separated from the ²⁰³Tl targets, and after an optimal waiting period to allow build up, the accumulated ²⁰¹Tl daughter is separated from the parent lead isotopes. Various methods for performing the separation have been reported. E. Lebowitz, et al., J, Nucl. Med., 16:151-155 (1975), for example describes a production method in which EDTA complexing agent, hydrazine sulfate and a ion exchange column are first used to separate the lead activities from the thallium targets. Next, an anion exchange column is used to adhere the ²⁰¹Tl⁺³ (oxidated by NaClO) and allow the lead activities to be eluted. Finally the ²⁰¹Tl activity is then eluted with hot hydrazine-sulfate solution, reducing Tl⁺³ to Tl⁺¹. S. M. Qaim, et al., Int J. Appl. Radiat. Isot., 30: 85-95, 1979, reported a procedure of precipitating quantitatively the carrier-free lead activities by Fe(OH)₃ first, followed by an anion-exchange column separation of ²⁰¹Tl. M. D. Kozlova, et al., Int J. Appl. Radiat. Isot., 35: 685-687, 1984, reported a procedure that includes the co-precipitation of the lead activities as strontium sulfate, followed by solvent extraction using butyl acetate and adding KBrO₃ solution. J.L.Q. de Britto, et al., J. Radioanal. Nucl. Chem. Letters, 96: 181-186, 1985, reported a separation based on the properties of a chelating caboxylic acid ion exchange resin column which at pH 4.5 retains lead while thallium is easily eluted. Both J.A. Campbell, et al., (J. Labelled Compounds and Radiopharmaceuticals, 13:437-443, 1977) and M.C. Lagunas-Solar, et al., (Int J. Appl. Radiat. Isot., 33: 1439-1443, 1982) suggested to use Dowex 50W-X8 system to adsorb lead and thallous ion, while thallic ion is eluted by 0.005N hydrochloric acid containing 0.1 % chlorine gas. These methods all tend to be time consuming, hazardous, and expensive.

To be suitable for use in radiopharmaceuticals, it is also generally important for the radioisotope to be separated from the parent compounds to a high degree of purity. For example, for products containing ⁹⁰Y, the level of ⁹⁰Sr should be kept below 10⁻⁶Ci per Ci ⁹⁰Y. Contamination by other metals such as Fe, Cu, Zn, and Ca should also be reduced, because the foreign metallic ions can compete with Y⁺³ for chelating agents that may be used in the pharmaceutical products. However, many different techniques for the separation of radioisotopes suffer from incomplete separation, and/or contamination by other metals. Consequently, the prior art has failed to provide a simple separation process for producing quality radioisotopes that meet these criteria.

Also, many of the known techniques have deficiencies in scaling up the separation process due to radiation damages to the materials and devices used in the separation. For example, J. S. Wike, et al., Appl. Radiat. Isot., 41: 861-865, 1990, discloses a separating technique using DEHPA in dodecane to extract ⁹⁰Y. However, the complexity of the process, which involves repeated stripping of the organic extractant, leads to the accumulation of radiolysis products of the extractant in either the ⁹⁰Sr stock solution or ⁹⁰Y product. It is believed that both the DEHPA and radiolytic fragments of organic extractant cause the ⁹⁰Y to stick to the wall of glass vessels used in the process, resulting in poor recovery of ⁹⁰Y. Consequently, this method fails to provide a simple ⁹⁰Sr/⁹⁰Y separation process for producing quality ⁹⁰Y in high yields.

Horwitz, et al., U.S. patent 5,368,736, discloses another separation technique that is capable of producing high decontamination factor of ⁹⁰Y. This technique involves immobilizing strontium-selective extractant of hydrophobic crown ether carboxylic acid onto polymeric resin to selectively strip ⁹⁰Sr away from ⁹⁰Y after passing a ⁹⁰Sr/⁹⁰Y mixture through the crown ether column. The ⁹⁰Y effluent is further purified by resin that is impregnated with rare-earth selective extractant, which is a mixture of octyl-(phenyl)-N,N-diisobutylcarbamoylmethylphosphine oxide (CMPO) and tri-butyl phosphate (TBP). The above separation technique avoids the use of organic solvent but requires at least three strontium-selective columns for the complete retention of ⁹⁰Sr, which may limit its potential for multicurie scale-up. In addition this technique requires pH adjustment and volume concentration of ⁹⁰Y between the crown ether and CMPO/TBP columns, which further complicate the process at the multicurie level.

Another present commercial method for supplying ⁹⁰Y involves the extraction of ⁹⁰Y from a mixture of ⁹⁰Y and ⁹⁰Sr using a DEHPA solvent extraction process that requires high concentrations of HNO₃ or HCl (8-10 N) to strip the ⁹⁰Y. When the excess acid is evaporated, the ⁹⁰Y recombine with trace amounts (1-2 mg/liter) of DEHPA in the ⁹⁰Y product, which results in loss of product on glassware (J. S. Wike, et al., J. Appl. Radiat. Isot, 41: 861-5, 1990), and in the shipping container. The recombination of ⁹⁰Y with trace amounts of DEEIPA can also result in precipitates, and incomplete tagging of the targeted molecule with ⁹⁰Y. Consequently, the prior art has failed to provide a simple ⁹⁰Sr/⁹⁰Y separation process for producing quality ⁹⁰Y in high yields.

What is needed is an improved method and apparatus for simple, low cost, separation of ions of metallic elements in aqueous solution, and, in particular, for separation of radioisotopes from their parent compounds. For example, a method that may be used to separate ⁹⁰Y from ⁹⁰Sr to provide ⁹⁰Y ions with improved purity, concentrations and yields for use in radiotherapy. The process should also not require the use of any organic solvent, should minimize liquid waste discharge and also minimize waste of the radioactive parent.

### Summary of the Invention

In one embodiment of the invention, there is provided a method for separating ions of metallic elements in aqueous solution. The method comprises the steps of providing an ion exchanger that comprises a carbon or graphite substrate impregnated with a hydrophobic chelating extractant. The extractant is one that has a greater affinity, at a selective pH, for ions of a first metallic element, than for ions of a second metallic element that is different than the first element. This method further entails the step of providing a solution that compnses ions ofsaid first and second metallic elements, and contacting the solution with the ion exchanger at the selective pH, for a time sufficient for ions of said first element to become bound thereto.

In another embodiment of the invention, a separation column for separating metallic elements is provided. The separation. Column comprises:

(a) a body portion having both an inlet and an outlet;

(b) an ion exchanger housed within the body portion, that comprises a carbon or graphite substrate impregnated with a hydrophobic chelating extractant that has a greater affinity, at a selective pH, for ions of a first metallic element than for ions of a second metallic element; and

(c) a solution at the selective pH, that contains ions of the first and second metallic elements.

Yet another embodiment of the invention is a ²⁰¹Tl generator comprising:

(a) a body portion having an inlet and an outlet;

(b) an ion exchanger housed within the body portion.

The ion exchanger comprises carbon or graphite fibers impregnated with an acidic organophosphorus extractant such as DEHPA, EHEHPA. or di(2,4,4-trimethyl- pentyl)phosphinic acid (DTMPFA). The ion exchanger further comprises ions of ²⁰¹Pb bound to the extractant.

In a further embodiment of the invention, there is provided a ⁹⁰Y generator. This generator comprises:

(a) a first column comprising:

(1) a first body portion having an inlet and an outlet;

(2) a first ion exchanger housed within the first body portion, wherein the first ion exchanger comprises an acidic organophosphorus extractant;

(3) a feed solution within the first body portion and in contact with the first ion exchanger, the feed solution comprising ⁹⁰Sr ions and having a pH from 1.5 to 2.5; and

(b) a second column comprising:

(1) a second body portion having an inlet and an outlet, wherein the inlet of the second column is in flow communication with the outlet of the first column;

(2) a second ion exchanger within the second body portion, the second ion exchanger comprising a neutral or bifunctional organophosphorus extractant adsorbed onto a carbon or graphite substrate.

Additional embodiments of the invention will be readily apparent to those of ordinary skill in the art upon review of the instant application.

### Brief Description of the Drawings

The numerous objects and advantages of the present invention may be better understood by those skilled in the art by reference to the accompanying detailed description and the following drawing, in which:

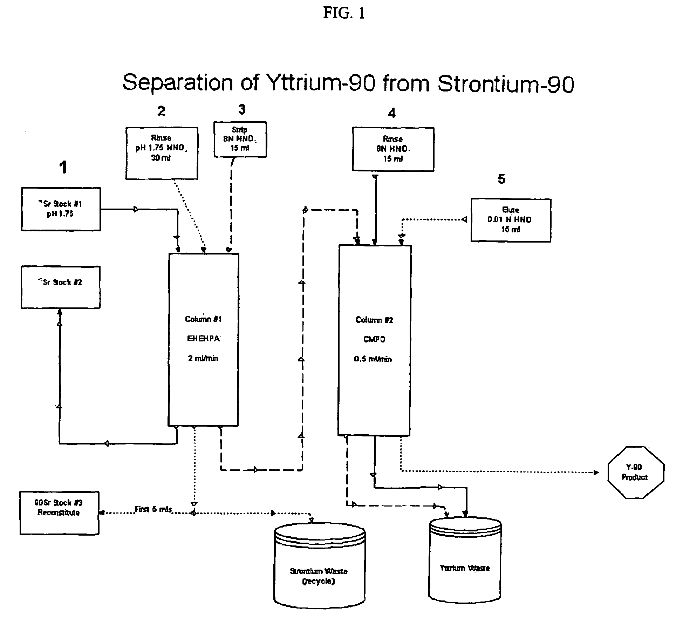

FIG. 1 is a schematic diawing of a process for separating ⁹⁰Y from ⁹⁰Sr.

### Detailed Description of the Invention

The present invention provides improved methods and apparatus for separating ions of metallic elements in aqueous solution, thereby providing relatively pure samples of the desired metallic elements for use in a wide variety of applications in a wide number of industries, including mining, environmental decontamination, the pharmaceutical industry, and in the treatment and diagnosis of disease, to name but a few. Separation of ions is achieved with the use of ion exchanges that will preferentially bind ions of one element, while ions of another element remain in solution. As used herein, "separation" and "separating" means that at least about 90%, preferably greater than about 90%, more preferably greater than about 95% and even more preferably greater than about 99% of the ions of one metallic element present in the aqueous solution may be removed from the solution by the ion exchanger, while at least about 90%, preferably greater than about 90%, more preferably greater than about 95% and even more preferably greater than about 99% of the ions of another, different metallic element remain in the aqueous solution. In preferred embodiments, solutions may be prepared in which a separation of greater than about 10⁴, more preferably greater than about 10⁶, and still more preferablyabout 10⁸ may be achieved. In other words, taking the separation of ⁹⁰Y from ⁹⁰Sr as an example, using the methods and apparatus described herein, it is possible to obtain a sample of purified ⁹⁰Y in which the ⁹⁰Sr/⁹⁰Y ratio is preferably less than about 10⁻⁶, and more preferably less than about 10⁻⁸.

In many applications, the methods and apparatus will be used to separate metallic elements belonging to different Groups in the long periodic table. However, the methods may be adapted to separate elements belonging to the same Group, as well. Groups in the long periodic table include main group elements, including Groups IA, IIA, IIIB, IVB, VB, VIB, transition metals, including Groups IIIA, IVA, VA, VIA, VIIA, VIIIA, IB, and IIB, Lanthanides, including elements with atomic atom from 57 to 71, and Actinides, including elements with atomic number from 89 to 103. Thus, suitable elements which may be separated using the methods and systems of the present invention include, for example, Li, Be, Na, Mg, Al, K, Ca, Sc, Ti, V, Cr, Mn, Fe, Co, Ni, Cu, Zn, Ga, Ge, Rb, Sr, Y, Zr, Nb, Mo, Tc, Ru, Rh, Pd, Ag, Cd, In, Sn, Sb, Cs, Ba, La, Hf, Ta, W, Re, Os, Ir, Pt, Au, Hg, Tl, Pb, Bi, Po, Fr, Ra, Ac, Ku, Ce, Pr, Nd, Pm, Sm, Eu, Gd, Tb, Dy, Ho, Er, Tm, Yb, Lu, Th, Pa, U, Np, Pu, Am, Cm, Bk, Cf, Es, Fm, Md, No, and Lw.

to achieve such ends, the present invention makes use of hydrophobic chelating extractants. Suitable extractants, for use in the present invention include: acidic organophosphorus extractants, for example DEHPA, EHEHPA and DTMPPA; neutral organophosphorus extractants, for example TBP and tri-n-octylphosphine oxide (TOPO), bifunctional organophosphorus extractants, for example CMPO and N,N,N',N'-tetraoctyl-3-oxamentanediamide (TOGDA); basic extractants, for example tri-n-octylamine (TOA) and tricaprylmethylammonium chloride. Other extractants known to those of skill in the art may also be used, including hydroxyoximes, for example 5,8-diethyl-7-hydroxy-6-dodecane oxime and 2-hydroxy-5-nonylacetophenon oxime, crown ethers, for example di-t-butyldicyclohexano-18-crown-6, and dithiosemicarbazone.

In the present invention the hydrophobic chelating extractant is adsorbed onto a substrate to provide an ion exchanger. In preferred embodiments, the ion exchanger is housed in a column. The column will have at least one inlet and at least one outlet. In two column systems, described more fully below, an outlet of the first column may be in flow communication with an inlet of the second column. Additional inlets and/or outlets may be present in either or both columns as well, to add or recover rinse solutions, excess feed solutions, and the like.

Although a wide variety of different substrates suitable for use in an ion exchanger are known in the art, the inventors have discovered that substrates comprising carbon and graphite are particularly well suited to the methods and apparatus of the present invention. While it should not be construed as limiting the invention, it is thought that the hydrophobic interaction between the above-referenced extractants and carbon or graphite substrates is particularly strong, and does not interfere with the chelating portion of the extractants. The carbon and graphite substrates are also thought to have high stability in strong acids and bases, and may be more resistant man other types of substrates to the radiation fields that may be present when using the methods and apparatus of the present invention to separate radioactive metallic elements.

A variety of such carbon and graphite substrates may be used, including molded graphite and carbon, vitreous (glassy) carbon, pyrolytic graphite and carbon, carbon fibers, carbon composites, and carbon and graphite powders and particles. A common substrate for hydrophobic extractants is carbon coated inorganic materials prepared by decomposition of organic compounds in a 600 °C temperature gas stream, such as ZrO₂. It has been suggested that the bonding of organic ionophores to carbon-coated ZrO₂ involves hot only hydrophobic attraction, but also involves electronic (pi-pi) interaction of the organic ionophore to the graphitic planer structure (Paul T. Jackson et. al, Anal. Chem. 69:416-425,1997). This strong bonding prevents leaching of the organic ionophore much better than is observed with polymeric matrixes, such as Chromosorb or XAD adsorbents, or materials coated with cross-linked polybutadiene.

Pure carbon or graphite fibers, formed at >1500°C, have been found to provide a very good substrate for most hydrophobic extractants commonly used in solvent extraction of the present invention, and are preferred in embodiments of the present invention that utilize carbon or graphite substrates. In preferred embodiments, the carbon or graphite fibers are in the form of carbon or graphite felt. Preferably, this carbon or graphite felt is used with no other substrate. The low bulk density of about 50 mg/cm³ and high surface area (estimated at 30-40 m²/gm) of this product, as well as the ability to selectively bind organophosphorus extractants, allows columns to be prepared that can be operated at fast flow rates, for example from about 1 to about 10 ml/cm²/min, with good performance. Additionally, the felt is easy to cut and pack into columns, is easy to weigh, and adsorbs specific amounts of organophosphorus extractants more predictably than do powdery or granular materials.

Carbon or graphite felt suitable for use in the present invention may be obtained from commercial vendors (for example, from Fiber Materials, Inc. Biddeford, Me) in the form of 1/8 inch thick sheets. These low density flexible felt materials are produced by the carbonization and graphitization of long, small diameter organic Rayon filaments at 2300° C to produce a graphite felt with >99.7 % purity. This material has only ppm amounts of Cu and S impurities. Preleaching with HNO₃ solutions removes these impurities. The felt is dried at 110°C, and then loaded with the desired extractants in methanol solutions. After drying in air, the graphite felt is cut in circular pads using a Shim cutter of a diameter equal to or slightly larger than the diameter of the column. Several graphite felt pads, for example from about 5 to about 15 or more, depending on the size of the column, may be used in each column and compressed slightly to remove any voids.

The inventors of the present invention have also discovered that the affinity of various chemical organophosphorus extractants for different metallic elements is pH-dependent. For example, organophosphoric acids of the general formula (RO)₂P(O)(OH), such as DEHPA, organophosphonic acids of the general formula (RO)RP(O)(OH), such as EHEHPA, and organophosphinic acids of the general formula R₂P(O)(OH), such as DTMPPA, have a marked affinity for ⁹⁰Y at relatively low acid concentrations and may thus be used to extract ⁹⁰Y from ⁹⁰Sr under these conditions. Similarly, we have found that DEHPA has an affinity for ²⁰¹Pb at pH greater than or equal to 2.5, and may thus be used to readily separate ²⁰¹Pb from ²⁰¹Tl in a solution having such a pH level. In the presence of concentrated acid solutions, however, acidic organophosphoric extractants lose their affinity for these ions. Thus, a concentrated acid solution, such as a concentrated solution of hydrochloric acid, perchloric acid, sulfuric acid or nitric acid, may be used to elute ions that became bound to the extractant at a higher pH. As used herein, the term "concentrated" when used with regard to an acid refers to a solution having an acid concentration of at least about 4N.

In contrast, we have found that other organophosphorus compounds, such as CMPO and TBP, require much higher acid concentrations to retain ⁹⁰Y. Thus, in a concentrated acid solution, ⁹⁰Y becomes bound to CMPO, and the bound ⁹⁰Y may then be eluted from the extractant in the presence of a dilute acid solution. As used herein, the term "dilute" when used with regard to an acid solution, refers to a solution having an acid concentration of less than about 0.1N. The discovery of these unique chemical properties have allowed the inventors of the present invention to develop a process and apparatus to separate ⁹⁰Y from ⁹⁰Sr wherein the process requires no concentration (evaporation) and acidity adjustments between the column separation of ⁹⁰Y from ⁹⁰Sr.

In the present invention, an extractant is used that has a greater affinity for a ions of one metallic element, than for a second metallic element, optionally belonging to a different Group on the long periodic table, at a select pH. As used herein, "greater affinity" means that the affinity of the extractant for ions of the first metallic element, as compared to the affinity for elements of the second metallic element, is greater than about 10:1, preferably greater than about 100:1, more preferably greater than about 1000:1, and even more preferably greater than about 10,000:1.

In certain embodiments of the invention, the first metallic element is eluted from the extractant by a solution having a second pH, at which the extractant has substantially no affinity for ions of the first metallic element. As used herein, the term "substantially no affinity" means that at such a pH, at least about 75% of any bound ions will be eluted. Preferably, at such a pH at least about 85% of any bound ions will be eluted, and more preferably at least about 95% of any bound ions will be eluted. In particularly preferred embodiments greater than about 95%, and even greater than about 99% of any bound ions will be eluted.

If the loading of the column with substrate impregnated with extractant is too low, insufficient binding of the first metallic element may occur. If the loading is too heavy, incomplete elution from the extractant may result. Most preferably, the column is loaded with substrate impregnated with extractant to provide greater than about 99 % retention of the first metallic element at the selective pH, and greater than about 97% elution of the first metallic element at the second pH. The loading concentration of the extractant is determined experimentally for each extractant, but typically varies from about 0.1 to about 1.0 grams extractant per gram of graphite felt. For example, in one embodiment of the present invention, the optimum loading for EHEHPA is about 0.1 gram per gram of carbon or graphite felt, and for CMPO is about 0.25 gram/per gram of carbon or graphite felt. In this embodiment, EHEHPA on graphite felt at pH 1.5-2.5 allowed ⁹⁰Y to be recovered from ⁹⁰Sr as Sr(NO₃)₂ solution at pH 1.75-2.0 with a 3/8 inch column with >99 % recovery, and a 10⁴ separation from ⁹⁰Sr, with <1 % ⁹⁰Y remaining on the column after elution with concentrated HNO₃ solutions. It was found that DEHPA could be used on graphite felt in a similar manner as EHEHPA, but requires more concentrated acid to elute the ⁹⁰Y. Determination of the optimal loading amounts for other extractants, and other substrates, may be readily determined by those of ordinary skill in the art.

Carbon or graphite felt has also been found to be a suitable substrate for bifunctional organophosphorus extracants such as CMPO. The CMPO is dissolved in methyl alcohol and dried on the substrate. Carbon or graphite fibers bind the CMPO strongly, and TBP is not needed to retain the CMPO. In an example of one embodiment of the invention, a column 0.325 inches diameter (8 mm) prepared from 15 graphite felt pads 1/8 inch thick loaded with 0.2 to 0.25 gram CMPO per gram of carbon or graphite felt is compressed to about 1.25 inches long. There is very little resistance to flow when the ⁹⁰Y in 8 N HNO₃ solution is loaded and washed with a total of about 30 ml 8 N HNO₃. The column is pulled dry with the pump. Because the impregnated felt is very hydrophobic, water is removed efficiently from the column. The ⁹⁰Y is eluted at a flow rate of 0.5 ml/minute with a minimum of eluant, 3-8 ml. In practice, about 15 ml is used. The eluant is passed though a small (0.325 inch diameter, 1.0-inch long column of XAD-4 to insure removal of any organic and filtered in line with a 0.45 micron filter to remove any particulates. Eluants successfully used in this manner included dilute hydrochloric acid, for example, 0.05 N HCl, dilute nitric acid, for example about 0.01 to about 0.05N HNO₃, water, 0.9% NaCl, and various concentrations of ammonium acetate solution. Many other eluants that would be compatible with biochemical solutions can be used as well.

Thus, in a preferred embodiment of the present invention, a generator system comprised of two columns packed with organic extractant can separate yttrium 90 from stronium-90. The chromatographic extraction system used in the generator consists of an ion exchange column containing acidic organophosphorus extractants such as DEHPA, EHEHPA, or DTMPPA, in flow communication with a second column that contains a second ion exchanger comprising a bifuctional organophosphorus extractant such as CMPO or a neutral organophosphorous extractants such as TBP (tri-n-butyl phosphate) Lightweight porous chemically inert carbon or graphite felt is used to absorb the organic extractant and serve as a column matrix. In the separation process, about 0.2M ⁹⁰Sr(NO₃)₂ nitrate solution at about pH 1.75 is loaded onto an BHEHPA column ⁹⁰Sr ions pass through immediately, but ⁹⁰Y ions are retained. The ⁹⁰Sr solution is collected and stored in a shielded container for ⁹⁰Y grow-in for subsequent separation. After rinses with nitric solution at a pH of about 1.75, the ⁹⁰Y is eluted with a concentrated acid, such as about 8N HNO₃, and passed onto the second column that is connected in series. The eluted ⁹⁰Y ions are retained on second ion exchanger in the second column and are further rinsed with additional concentrated acid. The ⁹⁰Y ions are then eluted with a dilute acid, such as about 0.01N HNO₃, or an ammonium acetate buffer. Both pH, 1.75 and 8N nitric acid wash solutions are separated for any residual ⁹⁰Sr. The decontamination factor for each column is greater than about 10⁴. The ⁹⁰Sr/⁹⁰Y ratio in the second eluate is in the range of about 10⁻⁸ at time of production date. The ⁹⁰Y obtained from the above separation has been shown to be of high chemical and radionucludic purity and can be used for labeling targeted molecules having bearing chelators such as EDTA, DTPA and DOTA.

Other acidic organophosphorus extractants such as DEHPA and DTMPPA were also tested to separate ⁹⁰Y from ⁹⁰Sr. The separation of ⁹⁰Y from ⁹⁰Sr could be achieved at pH about 1, about 2 and about 3 when DEHPA, EHEHPA and DTMTPA were used, respectively, which are consistent with the acidic strength of DEHPA, EHEHPA and DTMPPA.

The elution of ⁹⁰Y activity from the column was quantitatively similarregardless of which organic extractant was used. It is also preferable to use about 8N HNO₃ to elute ⁹⁰Y off an EHEHPA column and retain it on CMPO column, as any less concentrated HNO₃ may result in some loss of ⁹⁰Y in both columns.

There are several advantages of the process and apparatus of the present invention over known extracting processes in this field. Firstly, the contact time between the ⁹⁰Y activity and organic extractant is short, thus eliminating radiolytic breakdown of organic extractant. Secondly, graphite felt is a better absorbent than polymeric resin due to high resistance toward both chemical and radiation damage. Thirdly, because EHEHPA retains ⁹⁰Y at about pH 1.75 HNO₃ and CMPO retains ⁹⁰Y with concentrated HNO₃, the separation is a continuous process and there is no pH adjustment and volume concentration between the two organic extraction columns, which further reduce the process time. Fourthly, no organic solvent is involved in the disclosed process and much less aqueous radio-waste is also generated.

The quality of ⁹⁰Y obtained from the above process is suitable for therapeutic applications. The decontamination factor of both EHEHPA and CMPO column is in the order of about 10⁴ and the overall process can achieve an about 10⁸ decontamination factor. ICP analyses show low metal ions contamination. The radiochemical purity of ⁹⁰Y radiolabeling of DOTA derived biological molecule is equivalent to that of commercial ⁹⁰Y activity.

Another embodiment of the present invention involves a generator system and method for providing ²⁰¹Tl. As discussed above, ²⁰¹Tl may be provided by radioactive decay of ²⁰¹Pb. We have discovered that acidic organophosphorus extractants, such as DEHPA, EHEHPA, and DTMPPA have a strong affinity for ²⁰¹Pb, but not for ²⁰¹Tl, at pH greater than or equal to about 2.5. Thus, an embodiment of the present invention is provided that comprises a chromatographic column that contains an acidic organophosphorus extractant impregnated on a carbon or graphite substrate, as described elsewhere herein. When loaded with a solution of ²⁰¹Pb having a pH greater than or equal to about 2.5, the ²⁰¹Pb is retained on the column. As ²⁰¹Tl is generated by the decay of the parent isotope, it is released from the extractant into solution. The system is allowed to decay for a time sufficient to provide a predetermined portion of ²⁰¹Tl, and then rinsed with an aqueous solution having a pH greater than or equal to about 2.5. Suitable rinses include, *inter alia,* water, dilute hydrochloric or nitric acid, or any biocompatible buffer solution. Preferably, an about 0.9% NaCl solution at about pH 5.5 is used. The efficiency of this generator system, and the fact that ²⁰¹Tl can be eluted simply with H₂O or 0.9% NaCl, provide an advantage over any generator system for ²⁰¹Tl production described previously.

### EXAMPLES

The invention is further demonstrated in the following examples. All of the examples are actual examples. The examples are for purposes of illustration and are not intended to limit the scope of the present invention.

### Example 1, Separation of ⁹⁰Y from a 17 mCi ⁹⁰Sr/⁹⁰Y generator

After a 2 week ⁹⁰Y build-up 0.2 M Sr(NO₃)₂ pH 1.75 containing 17 mCi ⁹⁰Sr was loaded onto an EHEHPA column (0.1g/g-wt. graphite felt) at 2.0 ml/min flow rate. The eluted ⁹⁰Sr ions were collected in a shielded container. The adsorbed ⁹⁰Y ions were washed with 30 ml HNO₃ pH 1.75 at 2.0 ml/min. The first 3 ml wash was added to the ⁹⁰Sr solution and the remaining wash solution was collected in a separate waste bottle for recycle of residual ⁹⁰Sr. 15 ml of 8N HNO₃ was used to elute the adsorbed ⁹⁰Y from the EHEHPA column to a CMPO column (0.25g/g-wt. graphite felt) at 0.5 ml/min. An additional 15ml of 8 N HNO₃ was used to rinse the CMPO column. 15 ml of 0.01 N HNO₃ at 0.5 ml/min was used to elute ⁹⁰Y and 15.77 mCi was collected. The 8N HNO₃ load or wash solutions did not contain any ⁹⁰Y.

### Example 2, Separation of ⁸⁵Sr

0.2M Sr(NO₃)₂ pH 1.75 containing 2.22 mCi ⁸⁵Sr was loaded onto an EHEHPA column (0.1 g/g-wt. graphite felt) at 2.0 ml/min flow rate. 2.17 mCi ⁸⁵Sr was eluted and collected in a shielded container. The EHEHPA column washed with 30 ml HNO₃ pH 1.75 at 2.0 ml/min, the first 3 ml wash was counted and contained 0.047 mCi ⁸⁵Sr (~2%); 0.0021 mCi (~0.1%) in the next 12 ml wash and 0.0002 mCi (~0.01%) in the following 15 ml wash. 15 ml of 8N HNO₃ was used to elute the EHEHPA column to a CMPO column (0.25g/g-wt. graphite felt) at 0.5 ml/min. An additional 15ml of 8N HNO₃ was used to rinse the CMPO column. Finally 15 ml of 0.01 N HNO₃ at 0.5 ml/min was used to elute the CMPO column. There was no detectable ⁸⁵Sr activity in the CMPO column washes.

### Example 3, Separation of ⁹⁰Y

0.2M Sr(NO₃)₂ pH 1.75 containing 1.31 mCi ⁹⁰Y was loaded onto an EHEHPA column (0.1g/g-wt. graphite felt) at 2.0 ml/min flow rate. The Sr(NO₃)₂ solution was collected and had no ⁹⁰Y. The adsorbed ⁹⁰Y on the EHEHPA were rinsed with 30 ml HNO₃ pH 1.75 at 2.0 ml/min. The wash solution contained no ⁹⁰Y. 15 ml of 8N HNO₃ was used to elute the adsorbed ⁹⁰Y from the EHEHPA column to a CMPO column (0.25g/g-wt. graphite felt) at 0.5 ml/min. An additional 15ml of 8N HNO₃ was used to rinse the CMPO column. Neither the load nor wash 8N HNO₃ contained any ⁹⁰Y. 15 ml of 0.5M sodium acetate pH 6 at 0.5 ml/min was used to elute the 1.0 mCi of ⁹⁰Y collected.

### Example 4, Separation of ⁹⁰Y from a 6.5 Ci ⁹⁰Sr/⁹⁰Y generator

After a 1 week ⁹⁰Y build-up 0.2M Sr(NO₃)₂ pH 1.75 containing 6.5 Ci ⁹⁰Sr was loaded onto an EHEHPA column (0.1 g/g-wt. graphite felt) at 2.0 ml/min flow rate. The eluted ⁹⁰Sr were collected in a shielded container. The adsorbed ⁹⁰Y were washed with 30 ml HNO₃ pH 1.75 at 2.0 ml/min. 15 ml of 8N HNO₃ was used to elute the adsorbed ⁹⁰Y from the EHEHPA column to a CMPO column (0.25g/g-wt. graphite felt) at 0.5 ml/min. An additional 15ml of 8N HNO₃ was used to rinse the CMPO column. 15 ml of 0.01N HNO₃ at 0.5 ml/min was used to elute ⁹⁰Y and 4.9 Ci was collected. The ratio of ⁹⁰Sr to ⁹⁰Y in the product was ~10⁻⁸.

### Example 5, Extraction of Tl-201 with DEHPA column

DEHPA (10 pads, 0.325" in diameter, 0.6 g/g graphite) was packed in a 0.75"x2.75" glass column and followed by conditioned with 5 mL pH 2.5 and blown dry with 5 mL air. 200 uCi of ²⁰Tl was added to 10 mL of pH 2.5 nitric acid. The pH of the ²⁰¹Tl solution was measured and adjusted to pH 2.5 with NaOH. There was no ²⁰¹Tl retained in the column after 10 ml loading followed by 10 ml water wash at 2 mL/min flow rate pumped with peristaltic pump. No ²⁰¹Tl is retained in the column at other pH, such as 3, 4 and 5.

### Example 6, Extraction of Pb-203 with DEHPA column

DEHPA (10 pads, 0.325" in diameter, 0.6 g/g graphite) was packed in a 0.75"x2.75" glass column followed conditioned with 5 mL pH 2.5 nitric acid and blown dry with 5 mL air. 80 uCi of ²⁰³Pb was added to 10 mL of pH 2.5 nitric acid, pH of ²⁰³Pb solution was measured and adjusted to pH 2.5 with NaOH. ~ 80 uCi of ²⁰³Pb retained in the column after 10 ml loading, followed by 10 ml water wash at 2 mL/min flow rate pumped with a peristaltic pump. Similar results were seen at other pH, such as 3, 4 and 5. Less than 80 uCi of ²⁰³Pb was adsorbed in the column when pH is less than 2.

### Example 7, Elution of daughter Tl-201 from Tl-201 Generator

A ²⁰¹Tl generator was prepared by loading 20 mL of pH 2.5 nitric acid containing aliquot of irradiated ²⁰³Tl target solution on a DEHPA column (10 pads, 0.325" in diameter, 0.6 g/g graphite), followed by rinsing the column with 20 mL of water. Flow rate was kept at 2 mL/min in the column preparation. The irradiated ²⁰³Tl target solution comprises 20 uL ²⁰¹Pb solution (-2.38 mCi of Pb-201, determined by Ge (Li)). Eighteen hours later, 221 uCi of ²⁰¹Tl was collected in 40 mL of water eluate. Additional 24 hours later, 56 uCi of ²⁰¹Tl was collected in 40 mL of water eluate from the same generator.

## Claims

1. A method for separating ions of metallic elements in aqueous solution comprising:
Providing an ion exchanger comprising a carbon or graphite substrate impregnated with a hydrophobic chelating extractant having a greater affinity, at a selective pH, for ions of a first metallic element than for ions of a second metallic element, wherein said first element is different than said second element;
providing a solution comprising ions ofsaid first and second metallic elements; and
contacting said ion exchanger with said solution at said selective pH for a time sufficient for at least a portion of said ions of said first metallic element to become bound thereto.

2. A method according to Claim 1, wherein said carbon or graphite substrate comprises carbon or graphite fibers in the form of carbon or graphite felt.

3. A method according to Claim 1, wherein the hydrophobic chelating extractant is an acidic organophosphorus extractant selected from the group consisting of DEHPA, EHEHPA, and DTMPPA.

4. A method according to Claim 3, wherein said first metallic element is ²⁰¹ Pb and said second metallic element is ²⁰¹Tl, said acidic organophosphorus extractant is DEHPA, and the pH of said aqueous solution is greater than or equal to 2.5.

5. A method according to Claim 3, wherein the first metallic element is ⁹⁰Y and the second metallic element is ⁹⁰Sr, said acidic organophosphorus extractant is EHEHPA, and the pH of said aqueous solution is from 1.5 to 2.5.

6. A method according to Claim 1, further comprising the step of preparing an eluate by eluting at least a portion of the ions of said first metallic element from said ion exchange with a second solution having a second pH at which said ion exchange has substantially no affinity for ions of said first metallic element.

7. A method according to Claim said first metallic element is ⁹⁰Y.

8. A method according to Claim 6, further comprising the step of contacting said eluate with a second ion exchange, said second ion exchange comprising a second organophosphorus extractant that has an affinity for ions of said first metallic element at said second pH.

9. A method according to Claim 8, wherein said second ion exchange comprises a carbon or graphite substrate impregnated with a bifunctional organophosphorus extractant, a neutral organophosphorus extractant, or a mixture thereof.

10. A method according to Claim 9 wherein said second extractant is selected from the group consisting of CMPO and TBP.

11. A method according to Claim 10, wherein said carbon or graphite substrate comprises carbon or graphite fibers in the form of carbon or graphite felt.

12. A method according to Claim 7, further comprising the step of contacting said eluate with a second ion exchange comprising CMPO adsorbed onto carbon or graphite felt.

13. A method according to Claim 8, further comprising the step of preparing a eluate by eluting at least a portion of said ions of said first metallic element from second eluate by eluting at least a portion of said ions of said first metallic element from said second ion exchange with a third solution having a third pH at which said second ion exchange has substantially no affinity for ions of said first metallic element.

14. A method according to Claim 12, further comprising preparing a second eluate by eluting said ⁹⁰Y from said second ion exchange with a third solution selected from the group consisting of dilute nitric acid, dilute hydrochloric acid, ammonium acetate buffer, about 0.9% NaCl, and water.

15. A method according to Claim 14, wherein the ⁹⁰Sr/⁹⁰Y ratio in said second eluate is less than 10⁻⁶.

16. A separation column system for separating metallic elements comprising:
(a) a body-portion having an inlet and an outlet;
(b) an ion exchange housed within said body portion, said ion exchange comprising a carbon or graphite substrate impregnated with a hydrophobic chelating extractant having a greater affinity, at a selective pH, for ions of a first metallic element than for ions of a second metallic element, wherein said first element is different than said second element;
(c) a a solution at said selective pH, said solution comprising ions of said first and second metallic elements.

17. A separation column system according to Claim 16, wherein said carbon or graphite substrate comprises carbon or graphite in the form of carbon or graphite felt.

18. A separation column system according to Claim 16, wherein the hydrophobic chelating extractant is an acidic organophosphorus extractant selected from the group consisting DEHPA. EHEHPA, and DTMPPA.

19. A separation column system according to Claim 18, wherein said first metallic ion is ²⁰¹P-b and said second metallic ion is ²⁰¹Tl, and the pH of said solution is greater than or equal to 2.5.

20. A ²⁰¹Tl generator comprising:
(a) a body portion having an law and an outlet; and
(b) an ion exchange housed within said body portion, said ion exchange comprising carbon or graphite fibers impregnated with an acidic organophosphorus extractant selected from the group consisting DEHPA. EHEHPA, and DTMPPA, and said ion exchange further comprising ions of ²⁰¹Pb bound to said extractant.

21. A ²⁰¹Tl generator according to Claim 20, further comprising:
(c) an aqueous solution having a pH of greater than or equal to 2.5 within said body portion and in contact with said ion exchange, said aqueous solution containing ²⁰¹Tl that has been produced by radioactive decay of said ²⁰¹Pb.

22. A ⁹⁰Y generator comprising:
(a) a first column comprising:
(1) a first body portion having an inlet and an outlet;
(2) a first ion exchange housed within said body portion, said first ion exchange comprising an acidic organophosphorus extractant adsorbed onto a carbon or graphite substrate;
(3) a feed solution within first said body portion and in contact with said first ion exchange, said feed solution comprising ⁹⁰Sr ions and having a pH from 1.5 to 2.5; and
(b) a second column comprising:
(1) a second body portion having an inlet and an outlet, wherein the inlet of said second column is in flow communication with the outlet of said first column;
(2) a second ion exchange housed within said second body portion, said second ion exchange comprising a neutral or bifunctional organophosphorus extractant.

23. A ⁹⁰Y generator according to Claim 22, wherein said first ion exchange comprises EHEHPA adsorbed onto carbon or graphite fibers, and said second ion exchange comprises CMPO adsorbed onto carbon of graphite felt.

## Patentansprüche

1. Verfahren zum Trennen von Ionen von metallischen Elementen in wässriger Lösung, umfassend:
Bereitstellen eines Ionenaustauschers, umfassend ein Kohlenstoff- oder Graphitsubstrat, das mit einem hydrophoben Chelat bildenden Extraktionsmittel imprägniert ist, das bei einem ausgewählten pH-Wert eine größere Affinität für Ionen eines ersten metallischen Elements als für Ionen eines zweiten metallischen Elements aufweist, wobei das erste Element von dem zweiten Element verschieden ist;
Bereitstellen einer Lösung, umfassend Ionen des ersten und zweiten metallischen Elements; und
In Kontakt Bringen des Ionenaustauschers mit der Lösung bei dem ausgewählten pH-Wert für eine Zeit, die ausreicht, dass mindestens ein Teil der Ionen des ersten metallischen Elements daran gebunden wird.

2. Verfahren nach Anspruch 1, wobei das Kohlenstoff- oder Graphitsubstrat Kohlenstoff- oder Graphitfasern in Form von Kohlenstoff oder Graphitfilz umfasst.

3. Verfahren nach Anspruch 1, wobei das hydrophobe Chelat bildende Extraktionsmittel ein saures phosphororganisches Extraktionsmittel, ausgewählt aus DEHPA, EHEHPA und DTMPPA, ist.

4. Verfahren nach Anspruch 3, wobei das erste metallische Element ²⁰¹Pb ist und das zweite metallische Element ²⁰¹Tl ist, wobei das saure phosphororganische Extraktionsmittel DEHPA ist und der pH-Wert der wässrigen Lösung größer als oder gleich 2,5 ist.

5. Verfahren nach Anspruch 3, wobei das erste metallische Element ⁹⁰Y ist und das zweite metallische Element ⁹⁰Sr ist, wobei das saure phosphororganische Extraktionsmittel EHEHPA ist und der pH-Wert der wässrigen Lösung 1,5 bis 2,5 beträgt.

6. Verfahren nach Anspruch 1, ferner umfassend den Schritt des Herstellens eines Eluats durch Eluieren mindestens eines Teils der Ionen des ersten metallischen Elements von dem Ionenaustauscher mit einer zweiten Lösung mit einem zweiten pH-Wert, bei dem der Ionenaustauscher im Wesentlichen keine Affinität für die Ionen des ersten metallischen Elements aufweist.

7. Verfahren nach Anspruch 6, wobei das erste metallische Element ⁹⁰Y ist

8. Verfahren nach Anspruch 6, ferner umfassend den Schritt des in Kontakt Bringens des Eluats mit einem zweiten Ionenaustauscher, wobei der zweite Ionenaustauscher ein zweites phosphororganisches Extraktionsmittel umfasst, das eine Affinität für Ionen des ersten metallischen Elements bei dem zweiten pH-Wert aufweist.

9. Verfahren nach Anspruch 8, wobei der zweite Ionenaustauscher ein Kohlenstoff- oder Graphitsubstrat umfasst, das mit einem bifunktionellen phosphororganischen Extraktionsmittel, einem neutralen phosphororganischen Extraktionsmittel oder einem Gemisch davon imprägniert ist.

10. Verfahren nach Anspruch 9, wobei das zweite Extraktionsmittel aus CMPO und TBP ausgewählt ist.

11. Verfahren nach Anspruch 10, wobei das Kohlenstoff- oder Graphitsubstrat Kohlenstoff- oder Graphitfasern in Form von Kohlenstoff- oder Graphitfilz umfasst.

12. Verfahren nach Anspruch 7, ferner umfassend den Schritt des in Kontakt Bringens des Eluats mit einem zweiten Ionenaustauscher, umfassend CMFO, das auf Kohlenstoff- oder Graphitfliz adsorbiert ist.

13. Verfahren nach Anspruch 8, ferner umfassend den Schritt des Herstellens eines zweiten Eluats durch Eluieren mindestens eines Teils der Ionen des ersten metallischen Elements von dem zweiten Ionenaustauscher mit einer dritten Lösung mit einem dritten pH-Wert, bei dem der zweite Ionenaustauscher im Wesentlichen keine Affinität für Ionen des ersten metallischen Elements aufweist.

14. Verfahren nach Anspruch 12, ferner umfassend Herstellen eines zweiten Eluats durch Eluieren des ⁹⁰Y von dem zweiten Ionenaustauscher mit einer dritten Lösung, ausgewählt aus verdünnter Salpetersäure, verdünnter Salzsäure, Ammoniumacetatpuffer, etwa 0,9% NaCl und Wasser.

15. Verfahren nach Anspruch 14, wobei das ⁹⁰Sr/⁹⁰Y-Verhältnis in dem zweiten Eluat weniger als 10⁻⁶ betragt.

16. Trennsäulensystem zum Trennen von metallischen Elementen, umfassend:
(a) ein Gebäuseteil mit einem Einlass und einem Auslass;
(b) einen Ionenaustauscher, der sich innerhalb des Gehäuseteils befindet, wobei der Ionenaustauscher ein Kohlenstoff- oder Graphitsubstrat umfasst, das mit einem hydrophoben Chelat bildenden Extraktionsmittel, das bei einem ausgewählten pH-Wert eine größere Affinität für Ionen eines ersten metallischen Elements als für Ionen eines zweiten metallischen Elements aufweist, wobei das erste Element von dem zweiten Element verschieden ist;
(c) eine Lösung mit dem ausgewählten pH-Wert, wobei die Lösung Ionen des ersten und zweiten metallischen Elements umfasst.

17. Trennsäulensystem nach Anspruch 16, wobei das Kohlenstoff- oder Graphitsubstrat Kohlenstoff- oder Graphitfasern in Form von Kohlenstoff- oder Graphitfilz umfasst.

18. Trennsäulensystem nach Anspruch 16, wobei das hydrophobe Chelat bildende Extraktionsmittel ein saures Extraktionsmittel, ausgewählt aus DEHPA, EHEHPA und DTMPPA, ist.

19. Trennsäulensystem nach Anspruch 18, wobei das erste metallische Ion ²⁰¹Pb ist und das zweite metallische Ion ²⁰¹Tl ist und der pH-Wert der Lösung größer als oder gleich 2,5 ist.

20. ²⁰¹Tl-Genemtor, umfassend:
(a) ein Gehäuseteil mit einem Einlass und einem Auslass; und
(b) einen Ionenaustauscher, der sich innerhalb des Gehäuseteils befindet, wobei der Ionenaustauscher Kohlenstoff- oder Graphitfasern umfasst, die mit einem sauren phosphororganischen Extraktionsmittels imprägniert sind, ausgewählt aus DEHPA, EHEHPA und DTMTPA, und der Ionenaustauscher ferner Ionen von ²⁰¹Pb umfasst, die an das Extraktionsmittel gebunden sind.

21. ²⁰¹Tl-Generator nach Anspruch 20, ferner umfassend:
(c) eine wässrige Losung mit einem pH-Wert größer als oder gleich 2,5 innerhalb des Gehäuseteils und in Kontakt mit dem Ionenaustauscher, wobei die wässrige Lösung ²⁰¹Tl enthält, das durch radioaktiven Zerfall des ²⁰¹Pb erzeugt wurde.

22. ⁹⁰Y-Generator, umfassend:
(a) eine erste Säule, umfassend:
(1) einen ersten Gehäuseteil mit einem Einlass und einem Auslass;
(2) einen ersten Ionenaustauscher, der sich innerhalb des Gehäuseteils befindet, wobei der erste Ionenaustauscher ein saures phosphororganisches Extraktionsmittel umfasst, das auf einem Kohlenstoff- oder Graphitsubstrat adsorbiert ist;
(3) eine Beschickungslösung innerhalb des ersten Gehäuseteils und in Kontakt mit dem ersten Ionenaustauscher, wobei die Beschickungslösung ⁹⁰Sr-Ionen umfasst und einen pH-Wert von 1,5 bis 2,5 aufweist; und
(b) eine zweite Säule, umfassend.
(1) einen zweiten Gehäuseteil mit einem Einlass und einem Auslass, wobei der Einlass der zweiten Säule in Fließverbindung mit dem Auslass der ersten Säule steht;
(2) einen zweiten der sich innerhalb des zweiten Gehäuseteils befindet, wobei der zweite Ionenaustauscher ein neutrales oder bifunktionelles phosphororganisches Extraktionsmittel umfasst.

23. ⁹⁰Y-Generator nach Anspruch 22, wobei der erste Ionenaustauscher EHBHPA umfasst, das auf Kohlenstoff- oder Graphitfasern adsorbiert ist, und der zweite Ionenaustauscher CMPO umfasst, das auf Kohlenstoff- oder Graphitfilz adsorbiert ist.

## Revendications

1. Méthode de séparation d'ions d'éléments métalliques dans une solution aqueuse consistant à:
prévoir un échangeur d'ions comprenant un substrat en carbone ou en graphite imprégné d'un extractant chélateur hydrophobe ayant une plus grande affinité, à un pH sélectif, pour les ions d'un premier élément métallique que pour les ions d'un second élément métallique, ou ledit premier élément est différent dudit second élément;
prévoir une solution comprenant des ions desdits premier et second éléments métalliques; et
contacter ledit échangeur d'ions avec ladite solution audit pH sélectif pendant un temps suffisant pour qu'au moins une portion desdits ions dudit premier élément métallique se trouve liée.

2. Méthode selon la revendication 1, où ledit substrat en carbone ou en graphite comprend des fibres de carbone ou de graphite sous la forme d'un feutre de carbone ou de graphite.

3. Méthode selon la revendication 1, où l'extractant chélateur hydrophobe est un extradant d'organophosphore acide sélectionné dans le groupe consistant en DEHPA, EHEHPA et DTMPPA.

4. Méthode selon la revendication 3, où ledit premier élément métallique est ²⁰¹Pb et ledit second élément métallique est ²⁰¹Tl, ledit extractant d'organophosphore acide est DEHPA et le pH de ladite solution aqueuse est plus grand que ou égal à 2,5.

5. Méthode selon la revendication 3, où ledit premier élément métallique est ⁹⁰Y et le second élément métallique est ⁹⁰Sr, ledit extractant d'organophosphore acide est EHEHPA et le pH de ladite solution aqueuse acide est de 1,5 à 2,5.

6. Méthode selon la revendication 1, comprenant de plus l'étape de préparer un éluat par élution d'au moins une portion des ions dudit premier élément métallique dudit échange d'ions avec une seconde solution ayant un second pH auquel ledit échange d'ions n'a sensiblement pas d'activité pour les ions dudit premier élément métallique.

7. Méthode selon la revendication 6, où ledit premier élément métallique est ⁹⁰Y.

8. Méthode selon la revendication 6 comprenant de plus l'étape de contacter ledit éluat avec un second échange d'ion, ledit second échange d'ions comprenant un second extractant d'organophosphore qui a une affinité pour les ions dudit premier élément métallique audit second pH.

9. Méthode selon la revendication 8, où ledit second échange d'ions comprend un substrat en carbone ou graphite imprégné d'un extradant d'organophosphore bifonctionnel, un extradant d'organophosphore neutre ou un mélange de ceux-ci.

10. Méthode selon la revendication 9, où ledit second extractant, est sélectionné dans le groupe consistant en CMPO et TBP.

11. Méthode selon la revendication 10, où ledit substrat en carbone ou en graphite comprend des fibres de carbone ou de graphite sous la forme de feutre de carbone ou de graphite.

12. Méthode selon la revendication 7 comprenant de plus l'étape de contacter ledit éluat avec un second échange d'ions comprenant CMPO adsorbé sur du feutre de carbone ou de graphite.

13. Méthode selon la revendication 8 comprenant de plus l'étape de préparer un second éluat par élution d'au moins une portion desdits ions dudit premier élément métallique dudit second échange d'ions avec une troisième solution ayant un troisième pH auquel ledit second échange d'ions n'a sensiblement pas d'affinité pour les ions dudit premier élément métalliques.

14. Méthode selon a revendication 12 comprenant de plus la préparation d' un second éluat par élution dudit ⁹⁰Y dudit second échange d'ions avec une troisième solution sélectionnée dans le groupe consistant en acide nitrique dilué, acide chlorhydrique dilué, tampon d'acétate d'ammonium environ 0,9% NaCl et eau.

15. Méthode selon la revendication 14, où le rapport ⁹⁰Sr/⁹⁰Y dans ledit second éluat est inférieur à 10⁻⁶.

16. Système de colonne de séparation pour séparer des éléments métalliques comprenant:
(a) une portion de corps ayant une entrée et une sortie;
(b) un échange d'ions abrité dans ladite portion de corps, ledit échange d'ions comprenant un substrat en carbone ou en graphite imprégné d'un extractant chélateur hydrophobe ayant une plus grande affinité, à un pH sélectif, pour les ions d'un premier élément métallique que pour les ions d'un second élément métallique, où ledit premier élément métallique est différent dudit second élément;
(c) une solution audit pH sélectif, ladite solution comprenant des ions desdits premier et second éléments métalliques.

17. Système de colonne de séparation selon la revendication 16, où ledit substrat en carbone ou en graphite comprend des fibres de carbone ou de graphite sous la forme d'un feutre de carbone ou de graphite.

18. Système de colonne de séparation selon la revendication 16, où l'extractant chélateur hydrophobe est un extractant d'organophosphore acide sélectionné dans le groupe consistant en DEHPA, EHEHPA et DTMPPA.

19. Système de colonne de séparation selon la revendication 18, où ledit premier ion métallique est ²⁰¹Pb et ledit second ion métallique est ²⁰¹Tl et le pH de ladite solution est plus grand que ou égal à 2,5.

20. Générateur de ²⁰¹Tl comprenant:
(a) une portion de corps ayant une entrée et une sortie;
(b) un échange d' ions abrité dans ladite portion de corps, ledit échange d'ions comprenant des fibres de carbone ou de graphite imprégnées d'un extractant d'organophosphore acide sélectionné dans le groupe consistant en DEHPA, EHEHPA et DTMPPA et ledit échange d'ions comprenant de plus des ions de ²⁰¹Pb liés audit extractant.

21. Générateur de ²⁰¹Tl selon la revendication 20, comprenant de plus:
(c) une solution aqueuse ayant un pH plus grand que ou égal à 2,5 dans ladite portion de corps et en contact avec ledit échange d'ions, ladite solution aqueuse contenant ²⁰¹Tl qui a été produit par dégradation radioactive dudit ²⁰¹ Pb.

22. Générateur de ⁹⁰Y comprenant:
(a) une première colonne comprenant:
(1) une première portion de corps ayant une entrée et une sortie;
(2) un premier échange d'ions abrité dans ladite portion de corps; ledit premier échange d'ions comprenant un extractant d'organophosphore acide adsorbé sur un substrat en carbone ou en graphite;
(3) une solution d'alimentation dans ladite première portion de corps et en contact avec ledit premier échange d'ions, ladite solution d'alimentation comprenant des ions ⁹⁰Sr et ayant un pH de 1,5 à 2,5.
(b) une seconde colonne comprenant:
(1) une second portion de corps ayant une entrée et une sortie, ou l'entrée de ladite seconde colonne est en communication d'écoulement avec la sortie de ladite première colonne;
(2) un second échange d'ions abrité dans ladite seconde portion de corps, ledit second échange d'ions comprenant un extractant d'organophosphore neutre ou bifonctionnel.

23. Générateur de ⁹⁰Y selon la revendication 22, où ledit premier échange d'ions comprend EHEHPA adsorbé sur des fibres de carbone ou de graphite et ledit second échange d'ions comprend CMPO adsorbé sur un feutre de carbone ou de graphite.
